# EUROPÄISCHE PATENTANMELDUNG

(11) **EP 4 275 901 A1**
(43) Veröffentlichungstag der Anmeldung: **15.11.2023**
(21) Anmeldenummer: 22173007.0
(22) Anmeldetag: 12.05.2022
(51) Int. Cl.: B33Y 80/00, H02K 3/18, H02K 3/22, H02K 9/22, H02K 15/04

(54) **SPULE MIT WICKLUNGSKÜHLUNG**

(71) Anmelder: Siemens Aktiengesellschaft, 80333 München (DE)
(72) Erfinder: Weidermann, Christian, 07381 Pößneck (DE); Richter, Johannes, 90768 Fürth (DE); Schleicher, Klaus, 90473 Nürnberg (DE)
(74) Vertreter: Siemens Patent Attorneys

(57) **Zusammenfassung**

Es wird eine Spule (10) und ein Stator einer elektrischen Maschine angegeben, umfassend wenigstens eine Wicklung, welche einen Hohlleiter (11) umfasst/aus einem Hohlleiter (11) gebildet ist und umfassend wenigstens eine Wicklung, welche einen Massivleiter (13) umfasst/aus einem Massivleiter (13) gebildet ist, wobei die Wicklungen (11, 13) aus einem elektrisch leitfähigen Material gebildet sind und mit einem additiven Herstellungsverfahren hergestellt sind, wobei der wenigstens eine Hohlleiter (11) dazu ausgebildet ist, von einem flüssigen Kühlmittel durchströmt zu werden und einen hydraulischen Durchmesser (d, w, h) aufweist, welcher für die Durchströmung mit flüssigem Wasserstoff (LH2) geeignet ist, wobei die wenigstens eine Hohlleiterwicklung (11) und die wenigstens eine Massivleiterwicklung (13) mittels des additiven Herstellungsverfahrens so elektrisch miteinander verbunden sind, dass eine Verschaltung des elektrischen und hydraulischen Systems ausgebildet ist.

## Beschreibung

Die vorliegende Erfindung betrifft eine Spule für eine elektrische Maschine, insbesondere für den Stator einer elektrischen Maschine, umfassend wenigstens eine Wicklung, welche einen Hohlleiter umfasst, der dazu ausgebildet ist, von einem flüssigen oder Kühlmittel durchströmt zu werden. Weiterhin betrifft die Erfindung einen Stator für eine elektrische Maschine, eine elektrische Maschine mit einer derartigen Spule sowie ein Herstellungsverfahren für die Spule.

Die Leistung elektrischer Maschinen wird oft durch die Wicklungstemperatur im Stator beschränkt. Während des Betriebs entstehen elektromagnetische Verluste, die zur Erwärmung des Systems führen. Dazu gibt es vielfältige Möglichkeiten, die Kühlung elektrischer Maschinen zu realisieren, beispielsweise wird mit sogenannten Heat-Pipes eine Kühlung mittels Änderung des Aggregatszustandes eines Kühlmittels bewirkt. Verschiedene Gase werden zur Kühlung elektrischer Maschinen hergenommen, insbesondere bei offenen, nicht gekapselten Maschinen. Geschlossene, gekapselte Maschinen werden bisher mit verschiedenen Kühlflüssigkeiten oder flüssigen Gasen gekühlt. Die Kühlung kann passiv über das Gehäuse oder aktiv durch erzwungene Konvektion erfolgen. Dabei ist eine Kühlung durch erzwungene Konvektion deutlich effektiver als eine passive Kühlung, da das turbulenzströmende Kühlmedium einen besseren Wärmeübergangskoeffizienten erzeugt und dadurch mehr Wärme abtransportieren kann. Am effektivsten ist die sogenannte Direktkühlung, bei der das Kühlmedium so nah wie möglich an die Wicklung gebracht wird, um den Wärmeleitungswiderstand so gering wie möglich zu halten. Als Kühlmedium werden dazu Luft, Wasserglykol-Gemische oder Öle verwendet. Es sind spezielle Fälle bekannt, in denen perfluorierte chemische Verbindungen, zum Beispiel Novec, als Kühlmittel eingesetzt wurde. Häufig werden sogenannte Kühlmantel verwendet, auf denen das Kühlmedium in einer Kühlwendel um das Blechpaket geführt wird. Zudem werden die Wicklungen teilweise direkt mit Kühlmittelfluiden geflutet oder durchströmt.

Ziel der Kühlungsmaßnahmen ist stets, ohmsche Verluste in der Wicklung zu verringern, da die elektrische Leitfähigkeit sich mit zunehmender Temperatur verschlechtert. Der Abtransport von Wärme an die Umgebung durch reine Wärmeleitung und natürliche Konvektion ist aber physikalisch begrenzt. Hohe Leistungen der Bauteile bewirken hohe Wicklungstemperaturen und erfordern spezielle Maßnahmen. Die Leistung des Kühlsystems definiert demnach bisher die Größe der Aktivteile und somit auch die Abmessungen der elektrischen Maschine oder die Anforderungen an spezielle Materialien.

Aufgabe der Erfindung ist es daher, eine Spule anzugeben, welche die genannten Nachteile überwindet. Insbesondere soll eine Spule zur Verfügung gestellt werden, welche möglichst effektiv mit einem flüssigen oder gasförmigen Kühlmittel, insbesondere mit kryogener Eingangstemperatur, direkt-gekühlt werden kann. Eine weitere Aufgabe ist es, einen Stator und eine elektrische Maschine mit einer derartigen Spule anzugeben sowie ein Herstellungsverfahren dafür.

Diese Aufgaben werden durch die in Anspruch 1 beschriebene Spule, den in Anspruch 10 angegebenen Stator sowie die in Anspruch 11 beschriebene elektrische Maschine gelöst. Das Herstellungsverfahren wird in Anspruch 12 angegeben.

Die erfindungsgemäße Spule ist zum Betrieb in einer elektrischen Maschine ausgelegt. Sie umfasst wenigstens eine Wicklung, welche mindestens einen Hohlleiter umfasst, sowie wenigstens eine Wicklung, welche einen Massivleiter umfasst, wobei die Wicklungen aus einem elektrisch leitfähigen Material gebildet sind und mit einem additiven Herstellungsverfahren hergestellt sind. Der wenigstens eine Hohlleiter ist dazu ausgebildet, von einem flüssigen oder gasförmigen Kühlmittel durchströmt zu werden. Er weist einen hydraulischen Durchmesser auf, welcher für die Durchströmung mit flüssigem Wasserstoff (LH2) geeignet ist.

Der hydrodynamische Durchmesser in der Wicklung beträgt bevorzugt wenigstens 1,5 mm. Beim Additive Manufacturing gibt es wichtige Grenzen für die Herstellung der Hohleiter. Zum Beispiel beträgt die Wandstärke der Hohlleiter bevorzugt 0,5 mm. Auch können rechteckige oder ovale Geometrie der Hohlstruktur besonders geeignet realisiert werden. Besonders bevorzugt werden minimale Öffnungen mit einer Höhe von um die 0,5 mm realisiert. Für noch kleinere hydrodynamische Durchmesser wird es zunehmend schwierig bis zu unmöglich, das Pulver, das beim Fertigungsprozess in der Spule verbleiben kann, wieder aus der Spule heraus zu bekommen. Demnach kann ein hydrodynamischer Durchmesser von 1,5 mm, gewissermaßen eine vorteilhafte untere Grenze für die Kühlkanäle sein, bezüglich der Anforderungen durch das bevorzugte Herstellungsverfahren.

Dabei sind die Wicklungen, Hohlleiterwicklung genauso wie Massivleiterwicklung, derart mittels des additiven Herstellungsverfahrens elektrisch miteinander verbunden, dass damit eine Verschaltung des elektrischen und hydraulischen Systems geschaffen ist. Insbesondere sind Hohlleiter und Massivleiter so hergestellt, so dass sie unmittelbar ineinander übergehen beziehungsweise unmittelbar verbunden sind. Es ist keine elektrische Kontaktierung an dieser Stelle notwendig.

Vorteil der integrierten Kühlstruktur ist unter anderem, dass der Hohlleiter den hydraulischen Kreis und den elektrischen Kreis in einem Bauteil vereint.

Unter dem Hohlleiter soll allgemein ein zum Durchfluss in Richtung des elektrischen Pfades geeigneter Leiter verstanden werden. Insbesondere handelt es sich um einen rohrartigen Aufbau. Durch die Hohlleiterkühlung wird insbesondere gewährleistet, dass Kühlmittel in unmittelbarer Nähe zu den Wicklungen der Spule fließen kann und so die Spule auf effektive Weise entwärmt wird.

Die Ausbildung der Wicklungen mittels eines additiven Herstellungsverfahrens hat des Weiteren den Vorteil, individuelle Kühlkanalgeometrien realisieren zu können. Dies beginnt mit individuellen Leiterabmessungen, insbesondere für die Berücksichtigung des notwendigen hydraulischen Durchmessers für die Kühlung mit flüssigem Wasserstoff. Hierfür muss gewährleistet sein, dass auch an engen Windungsbereichen keine Zusetzung des Kühlmittelkanals erfolgen kann. Das heißt es muss ein ausreichend großer hydraulischer Durchmesser gewährleistet sein. Gleichzeitig ist auch eine sehr individuelle Spulenform, insbesondere beim Fertigen von Zahnspulen, ermöglicht.

Die Ausbildung der Wicklungen mittels eines additiven Herstellungsverfahrens hat zusätzlich den Vorteil, individuelle Leiterhöhen realisieren zu können. Die Beachtung minimaler Biegeradien herkömmlicher Hohlleiter entfällt. Das Aspektverhältnis ist freiwählbar. Die Fertigung erfordert kein Biegen des Hohleiters über die hohe Kante. Eine kompakte und enge Leiterführung ist realisierbar. Außerdem ist eine optimale Ausnutzung der Nut ermöglicht. Dies gewährleistet einen hohen Kupferfüllfaktor. Beispielsweise sind mehrere parallele Kühlstrukturen innerhalb eines Leiters möglich, insbesondere falls die Leiter größer, beziehungsweise breiter sind. Die Anbindung der Spule an das Blechpaket muss nicht mehr thermisch günstig sein, da es gerade bei kryogenen Medien kontraproduktiv ist, die Wärme aus den Eisenverlusten in die Spule zu ziehen.

Die Kombination aus dem voll integrierten Kühlsystem und weiteren Massivleiterwindungen ermöglicht eine weitere individuelle Einstellung des Spulenaufbaus auf die Anwendung und Leistung der Spule. Die Herstellungsmethode mittels Additive Manufacturing ermöglicht eine direkte Verschaltung des elektrischen und hydraulischen Systems und eine Unabhängigkeit von vorgefertigten Kupferdrahthohlleitern, welche insbesondere für die Kühlung mit flüssigem Wasserstoff nicht geeignet sind.

Für die Verbindung der Massivleiter und Hohlleiter zu einer Spule sind keine weiteren Ankoppelmodule erforderlich, da beide im selben additiven Herstellungsschritt aus demselben Material aufgebaut werden können. Diese Ausgestaltung trägt zu einer weiteren Minimierung ohmscher Verluste bei.

Die Spule wird also nicht komplett mit dem Kühlmedium durchströmt, sondern der hydraulische Kreis wird ab einer bestimmten Windungszahl n vom elektrischen Kreis getrennt. Ab diesem Zeitpunkt wird die Leiterhöhe t der m Massivleiterwindungen auf reduziert gegenüber dem Außenmaß des Hohlleiters. Beispielsweise wird die Leiterhöhe des Massivleiters auf weniger als 1,5 mm, weniger als 1 mm, weniger als 0,75 mm oder bevorzugt weniger als 0,5 mm reduziert. Optimal sind Leiterhöhen von weniger als 0,5 mm. Diese stellen eine besondere Herausforderung in der Herstellung mittels additiver Verfahren dar. Besonders bevorzugt sind Leiterhöhen von weniger als 0,4 mm, noch besser weniger als 0,3 mm oder Leiterhöhen von 0,25 mm. Derartig dünne Leiterhöhen bewirken, dass die Massivleiter schon fast folienartig sind.

Die Minimierung der Leiterhöhe des Massivleiters hat den Vorteil, sogenannte AC-Verluste, die durch Skin-Effekt und Proximity-Effekte hervorgerufen werden, zu reduzieren. Diese entstehen hauptsächlich in den radial innenliegenden Windungen der Spule und sind stark abhängig von der Höhe der Leiter. Um dem entgegenzuwirken sind Flachleiter mit geringer Höhe vorteilhaft.

Die Leiter sind dazu ausgelegt, Stromdichten von mindestens 30 A/mm², bevorzugt mindestens 35 A/mm² in der Statorwicklung zu gewährleisten. Um diese Stromdichte zu realisieren, hat darf die Wicklung eine bestimmte Temperatur nicht überschreiten. Dazu braucht es einen bestimmten minimalen Querschnitt, da es sonst zu heiß wird. Bei Absenken der Leiterhöhe, z.B. von 1 mm auf 0,5 mm, muss die Breite entsprechend größer werden.

Der wenigstens eine Hohlleiter der Spule weist insbesondere wenigstens eine Öffnung zum Einleiten und/oder Ausleiten von Kühlmittel auf. Diese kann insbesondere in einem axialen Endbereich der Spule ausgebildet sein. Die Öffnung des Hohlleiters kann insbesondere mit Zu- und/oder Ableitungen zur Verbindung mit einem übergeordneten Kühlmittelkreislauf verbunden sein. Dazu können Anschlüsse mit der Öffnung verbunden sein oder, mittels additivem Herstellungsverfahren, ein Anschluss an der Öffnung des Kühlmittelkanals ausgebildet sein.

Insbesondere kann der Hohlleiter wenigstens ein Anschlusselement aufweisen, welches mit einem Kühlmittelzulauf verbunden ist. Der Kühlmittelkreislauf ist insbesondere als offenes Kühlsystem ausgestaltet.

In einer besonders vorteilhaften Ausgestaltung der Erfindung ist die Spule als Zahnspule ausgebildet, alternativ kann die Spule als Hair pin ausgebildet sein. Die Spule kann auch als Stab mit oder ohne Teilleitern ausgeführt sein. Das wäre zum Beispiel bei Asynchronmaschinen der Fall. Prinzipiell sind aber alle Wicklungsformen denkbar. Insbesondere ist die Spule in einer besonderen Geometrie ausgebildet, wie sie von Vorteil für ein hocheffektives elektrisches Maschinenbauteil erforderlich ist. Gleichzeitig wird diese besondere Geometrie nur mittels additiver Herstellungsverfahren ermöglicht, weil bisherige Hohlleiter in Drahtform nicht für derartige Wicklungsgeometrien geeignet sind. Schickt man Flüssigwasserstoff durch herkömmliche Hohlleiter, hat es nicht denselben Effekt, da die Hohlstruktur nicht thermisch optimiert ist.

Bei der Verwendung von tiefkaltem Wasserstoffgas (GH2) oder flüssigem Wasserstoff (LH2) liegen Eintrittstemperaturen des Kühlmittels von bis zu -250°C vor. Dies ermöglicht den Betrieb der elektrischen Maschine auf sehr niedrigem Temperaturniveau und verbessert den Wirkungsgrad. Konventionelle vorgefertigte Kupferhohlleiter jedoch weisen keinen ausreichenden hydraulischen Durchmesser für eine derartige Kühlung auf.

In einer besonders vorteilhaften Ausführungsform der Spule weist der Massivleiter eine sehr geringe Leiterhöhe auf. Insbesondere weist der Massivleiter eine Leiterhöhe von weniger als 1,5 mm, bevorzugt weniger als 1 mm, weniger als 0,75 mm oder besonders vorteilhaft weniger als 0,5 mm auf. Dies wirkt sich insbesondere in einem erhöhten Kupferfüllfaktor aus. Die geringe Leiterhöhe der Massivleiterwicklungen wirkt sich zudem vorteilhaft auf die Reduzierung elektromagnetischer Verluste aus. Die Skin- und Proximityeffekte werden reduziert, weil diese von der Leiterhöhe abhängen. Deshalb wir die Nut bevorzugt nicht komplett mit massivem Kupfer gefüllt. Das hätte zwar einen Kupferfüllfaktor von fast 100%, aber die AC-Verluste wären zu groß. In massivem Kupfer würden Wirbelströme beziehungsweise Schlingströme durch das zeitlich veränderliche Magnetfeld des Rotors erzeugt. Eine Teilung des Kupfers in viele kleine Teilleiter reduziert diesen Effekt.

In einer weiteren vorteilhaften Ausführungsform der Erfindung umfassen die Hohlleiterwicklungen der Spule zusätzliche Wärmeüberträgerstrukturen oder sind damit verbunden. Wärmeüberträgerstrukturen können als integrierte Fin-strukturen, Pin Fins, Turbolatoren oder Baffle Plates ausgebildet sein. Diese haben den Vorteil, die Wärmeübergangskoeffizienten zu verbessern und somit noch eine schnellere und effizientere Spulenentwärmung zu gewährleisten. Die geometrische Freiheit des Additive Manufacturing bietet hier nahezu unbegrenzte Möglichkeiten.

Die wesentlichen Vorteile der beschriebenen Ausführung der Spule liegen allgemein darin, dass eine Verwendung von flüssigem Wasserstoff als Kühlmittel ermöglicht wird, eine hocheffiziente Entwärmung des elektrischen Bauteils gewährleistet wird, eine hohe Flexibilität für individuelle Abmessungen und Geometrien gewährleistet wird sowie eine Anpassung bezüglich reduzierter elektromagnetischer Verluste in den Massivleitern gewährleistet wird.

Die Vorteile der erfindungsgemäßen elektrischen Maschine und des erfindungsgemäßen Stators ergeben sich analog zu den oben beschriebenen Vorteilen der erfindungsgemäßen Spule.

Vorteilhafte Ausgestaltungen und Weiterbildungen der Erfindung gehen aus den Ansprüchen 2 bis 9 sowie der folgenden Beschreibung hervor. Dabei können die beschriebenen Ausgestaltungen der Spule, des Stators und der elektrischen Maschine vorteilhaft miteinander kombiniert werden.

Die elektrische Maschine kann, unabhängig von ihrer genauen Anwendung und Ausführungsform, ganz allgemein, entweder als Motor und/oder als Generator betrieben werden. Sie kann grundsätzlich vorteilhaft als Synchronmaschine ausgebildet sein. Alternativ kann sie aber auch vorteilhaft als Asynchronmaschine ausgebildet sein. Insbesondere kann die elektrische Maschine als Innenrotormaschine ausgestaltet sein, bei der der Stator den Rotor radial umgibt. Alternativ kann die elektrische Maschine als Außenläufermaschine ausgestaltet sein, bei der der rotierende Teil der Maschine den Stator umgibt.

Die elektrische Maschine kann so ausgestaltet sein, dass das verwendete Kühlmittel innerhalb eines geschlossenen Kühlmittelkreislaufs zirkuliert wird oder in einem offenen Kühlmittelkreislauf an weitere Maschinenteile weitergegeben wird.

Die Spule bzw. die elektrische Maschine ist allgemein auch für die Verwendung mit alternativen Kühlmitteln geeignet, so sie elektrisch isolierend sind. Beispielsweise kann die Spule zusätzlich elektrisch isoliert sein, wobei aber die Isolation wieder einen zusätzlichen Wärmeübergang bildet. Dafür kommen isolierende Kühlöle oder andere Kühlflüssigkeiten und Kühlgase, insbesondere flüssige Gase, in Frage.

Bei dem erfindungsgemäßen Herstellungsverfahren Verfahren zur Herstellung der Spule wird ein Kupfer-3D-Druckverfahren eingesetzt. Bei diesem Verfahren werden bevorzugt Hohlleiter und Massivleiter in einem gemeinsamen Verfahrensschritt hergestellt werden, so dass sie unmittelbar ineinander übergehen.

Im Folgenden wird die Erfindung noch anhand einiger vorteilhafter Ausführungsbeispiele beschrieben, unter Bezugnahme auf die Zeichnungen:
- Figur 1: zeigt eine Spule mit n Hohlleitern.
- Figur 2: zeigt schematisch einen Querschnitt durch eine Spule 10 mit n Hohlleitern 11 und m Massivleitern 13.

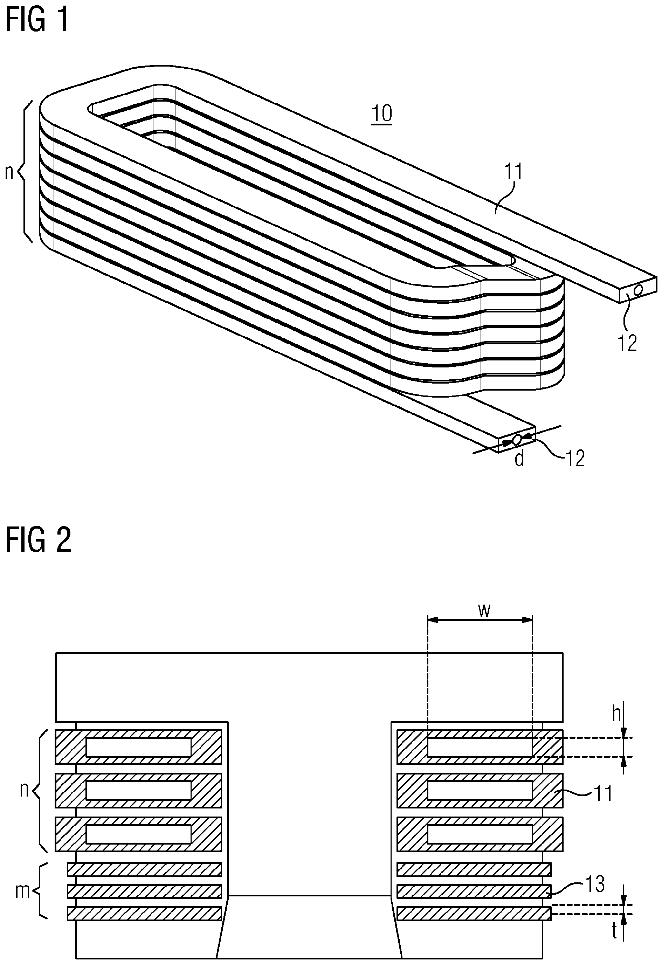

Figur 1 zeigt eine schematische perspektivische Ansicht einer Spule 10. Die Spule 10 umfasst n Windungen eines Hohlleiters 11. Die Spule weist Öffnungen 12 zum Ein- und Ausleiten von Kühlmittel auf. Der Durchmesser d des Hohlraums des Hohlleiters 11, welcher bis zu 1,5 mm, bis zu 1,25 mm, bevorzugt bis zu 1 mm oder bis zu 0,75 mm betragen kann, ist dafür geeignet, flüssigen Wasserstoff LH2 als Kühlmedium zu führen. Dabei sind die Wicklungen 11 durch ein additives Verfahren hergestellt, wodurch in den spulenkopfnahen Kurven und Abknickungen des Leiters keine Materialschwachstellen vorliegen, wie es bei einer Drahtwicklung der Fall wäre. Insbesondere sind die Breite w und Höhe h des Hohlraums 12 im Hohlleiter 11 bei einem eher rechteckigen Querschnitt oder der Durchmesser d des Hohlraums 12 im Hohlleiter 11 bei einem runden oder ovalen oder eher kreisförmigen Querschnitt individuell einstellbar für jedes Bauteil. Daraus ergibt sich der hydrodynamische Durchmesser, eine strömungsmechanische Größe, welche abhängig ist von den Maßen Breite w und Höhe h, bzw. Durchmesser d. Breite w und Höhe h können daher entsprechend skalieren. Die Höhe h ist bevorzugt größer als 0,5 mm, insbesondere größer als 0,6 mm oder größer als 0,7 mm gewählt. Bei festgelegter Höhe h kann die Breite w dann gezielt angepasst werden, dass der gewünschte hydrodynamische Durchmesser hergestellt wird. Insbesondere wird bei der Einstellung des Durchflusskanals gleichzeitig auf den Kupferfüllfaktor geachtet, um auch die elektrischen Eigenschaften zu berücksichtigen.

In Figur 2 ist ein Querschnitt durch eine Spule 10 gezeigt, welcher n Hohleiterwicklungen 11 und m Massivleiterwicklungen 13 aufweist. Zusätzlich zur Geometrie und zu den Maßen des Hohlleiters 11, ist auch die Dicke t der Massivleiterbahn 13 individuell einstellbar.

Wasserstoff weist eine hohe spezifische Wärmekapazität von 14,3 kJ/(kg•K) auf. Bei der Verwendung bei tiefkaltem Wasserstoffgas oder flüssigem Wasserstoff lH2 als Kühlmedium kann man mit Eingangstemperaturen des Kühlmediums von bis zu - 250°C und Ausgangstemperaturen des Kühlmediums zwischen 0°C und 100°C einen Temperaturhub von bis zu 350 Kelvin realisieren. Bevorzugt liegt der Eingangsdruck des Kühlmediums bei bis zu 10 bar. Bevorzugt wird das Kühlmedium Wasserstoff in einem offenen Kühlkreislauf ohne Rückkühlung eingesetzt. Dafür aber wird das Kühlmedium noch weiterer Verwendung in der Apparatur zugeführt, in der die elektrische Maschine eingesetzt wird. Dies betrifft beispielsweise elektrisch angetriebene Fahrzeuge. Hier ist die zweite Kühlfunktion, insbesondere zur Kühlung der Brennstoffzellen, verwendbar. Insbesondere lässt sich bei der Verwendung des Kühlmittels LH2 die Verdampfungsenthalpie vorteilhaft nutzen.

Bei dem erfindungsgemäßen Herstellungsverfahren kann die Wickelkopfgeometrie insbesondere auch an eine optimale Kühlung angepasst werden, z. B. die Kühlkanäle 12 so ausgestaltet werden, dass sie für die Verwendung von LH2 optimiert sind. Bevorzugt werden die Hohlleiterstrukturen 11 durch additive Fertigung, insbesondere von Kupfer, hergestellt. Das additive Fertigungsverfahren kann insbesondere ein Coldspray-Verfahren oder ein selektives Laserschmelzen von Kupfer umfassen. Bevorzugt werden Hohlleiterstrukturen 11, die elektrische Leitfähigkeiten von mehr als 55·10⁶ S/m hervorbringen. Durch den Einsatz additiver Fertigung wird die Gestaltungsvielfalt erhöht und komplexe Geometrien zur Optimierung der Flächen zum Wärmeaustausch werden gewährleistet. Durch die vorgeschlagene Spulendirektkühlung in einer elektrischen Maschine kann auch bei Stillstand der Maschine eine Kühlung erfolgen. Eine besondere Steigerung des Wirkungsgrades wird durch die Tiefentemperaturen gewährleistet. Die beschriebene Kühlung gewährleistet bei gleicher Leistung eine Reduktion des Materialbedarfes für Aktivteile, die Maschine kann kompakter gebaut werden. Gleichzeitig erhöht die effektive Kühlmöglichkeit die Leistungs- und Momentendichte und Verluste werden reduziert.

### Bezugszeichenliste

- n: Anzahl der Hohlleiterwicklungen
- m: Anzahl der Massivleiterwicklungen
- w: Breite des Hohlraums im Hohlleiter bei eher rechteckigem Querschnitt
- h: Höhe des Hohlraums im Hohlleiter bei eher rechteckigem Querschnitt
- d: Durchmesser des Hohlraums im Hohlleiter bei eher rundem oder ovalem oder kreisförmigem Querschnitt
- t: Dicke der Massivleiterbahn
- 10: Spule, insbesondere Zahnspule
- 11: Hohlleiter
- 12: Hohlraum im Hohlleiter bzw. Öffnung zum Einleiten und/oder Ausleiten von Kühlmittel
- 13: Massivleiter

## Patentansprüche

1. Spule (10) einer elektrischen Maschine, umfassend wenigstens eine Wicklung, welche einen Hohlleiter (11) umfasst/aus einem Hohlleiter (11) gebildet ist und umfassend wenigstens eine Wicklung, welche einen Massivleiter (13) umfasst/aus einem Massivleiter (13) gebildet ist, wobei die Wicklungen (11, 13) aus einem elektrisch leitfähigen Material gebildet sind und mit einem additiven Herstellungsverfahren hergestellt sind, wobei der wenigstens eine Hohlleiter (11) dazu ausgebildet ist, von einem flüssigen oder gasförmigen Kühlmittel durchströmt zu werden und einen hydraulischen Durchmesser (d, w, h) aufweist, welcher für die Durchströmung mit flüssigem Wasserstoff (LH2) geeignet ist, wobei die wenigstens eine Hohlleiterwicklung (11) und die wenigstens eine Massivleiterwicklung (13) mittels des additiven Herstellungsverfahrens so elektrisch miteinander verbunden sind, dass eine Verschaltung des elektrischen und hydraulischen Systems ausgebildet ist.

2. Spule (10) einer elektrischen Maschine nach Anspruch 1, wobei Hohlleiter (11) und Massivleiter (13) unmittelbar ineinander übergehen.

3. Spule (10) einer elektrischen Maschine nach einem der Ansprüche 1 oder 2, wobei der Hohlleiter (11) in wenigstens eine Öffnung (12) zum Einleiten und/oder Ausleiten von Kühlmittel aufweist.

4. Spule (10) einer elektrischen Maschine nach einem der vorstehenden Ansprüche, wobei der Hohlleiter (11) wenigstens ein Anschlusselement aufweist, welches mit einem Kühlmittelsystem verbunden ist.

5. Spule (10) einer elektrischen Maschine nach einem der vorstehenden Ansprüche, welche als Zahnspule ausgebildet ist.

6. Spule (10) einer elektrischen Maschine nach einem der vorstehenden Ansprüche, welche als Hair-Pin ausgebildet ist.

7. Spule (10) einer elektrischen Maschine nach einem der vorstehenden Ansprüche, wobei der Massivleiter (13) eine Leiterhöhe (t) von weniger als 1,5 mm, weniger als 1 mm, weniger als 0,75 mm oder weniger als 0,5 mm aufweist.

8. Spule (10) einer elektrischen Maschine nach einem der vorstehenden Ansprüche, wobei die Hohlleiterwicklungen (11) Wärmeüberträgerstrukturen aufweisen.

9. Spule (10) einer elektrischen Maschine nach Anspruch 8, wobei die Wärmeüberträgerstrukturen als Fin-Strukturen, Pin-Fins, Turbulatoren oder Baffle Plates ausgebildet sind.

10. Stator einer elektrischen Maschine, welcher mindestens eine Spule (10) nach einem der vorstehenden Ansprüche umfasst.

11. Elektrische Maschine mit einem Stator nach Anspruch 10.

12. Verfahren zur Herstellung einer Spule (10) nach einem der vorstehenden Ansprüche 1 bis 8 für eine elektrische Maschine, bei dem ein Kupfer-3D-Druckverfahren eingesetzt wird.

13. Verfahren nach Anspruch 12, bei dem Hohlleiter (11) und Massivleiter (13) in einem gemeinsamen Verfahrensschritt hergestellt werden, so dass sie unmittelbar ineinander übergehen.
